Europäisches Patentamt

(19) European Patent Office (11) Publication number: **0 122 255**

Office européen des brevets **B1**

(12) **EUROPEAN PATENT SPECIFICATION**

(45) Date of publication of patent specification: **28.01.87** (51) Int. Cl.⁴: **B 60 H 1/24**

(21) Application number: **82902358.9**

(22) Date of filing: **23.07.82**

(86) International application number:
**PCT/GB82/00226**

(87) International publication number:
**WO 84/00520 16.02.84 Gazette 84/05**

(54) **AIR VENTILATION AND EXTRACTION SYSTEM FOR MOTOR VEHICLES.**

(43) Date of publication of application:
**24.10.84 Bulletin 84/43**

(45) Publication of the grant of the patent:
**28.01.87 Bulletin 87/05**

(84) Designated Contracting States:
**AT BE CH DE FR LI LU NL SE**

(56) References cited:
EP-A-0 027 276
WO-A-80/01196
DE-A-2 704 523
DE-A-2 803 624
DE-A-2 847 224
DE-C- 963 038
FR-A-1 183 336
FR-A-2 200 483
FR-A-2 468 076
GB-A- 516 448
GB-A- 563 254
GB-A- 839 306
GB-A-2 091 413
US-A-2 853 932
US-A-3 835 606

(73) Proprietor: **RACCAH, Guy Bernard**
**Southern Leigh Blackberry Lane**
**Lingfield Surrey (GB)**

(72) Inventor: **RACCAH, Guy Bernard**
**Southern Leigh Blackberry Lane**
**Lingfield Surrey (GB)**
Inventor: **KING, James Bertram**
**5 Wardrobe Court 146a Queen Victoria Street**
**London EC4V 5AT (GB)**

(74) Representative: **King, James Bertram**
**Kings Patent Agency Limited Wardrobe Court**
**146a Queen Victoria Street**
**London EC4V 5AT (GB)**

## Description

This invention relates to an air extraction or ventilation system for motor vehicles and is primarily concerned with a system for use in private motor cars whereby better extraction of internal air can be achieved than with known systems, especially where the vehicle is intended for use in hot climates with air conditioning or where more efficient extraction of internal air is required, for example when the occupants of the vehicle are smoking.

Extraction systems have been proposed wherein a false roof inside the vehicle provides a duct for extraction of air. These arrangements reduce internal headroom and have to be designed into the vehicle at the outset as they require intake and/or extraction through the vehicle body. GB—A—839306, for example, discloses the use of the roof space for extraction but is concerned generally with overall ventilation by fresh air and does not solve the problem of clearing smoke from localised areas in a passenger compartment, nor does it disclose an arrangement which can be fitted to an existing vehicle. GB—A—516448 shows a venturi powered system, which may include a fan, but involves a complex structure not adaptable to modern vehicles of limited height. Further arrangements provided in double skin roof areas are disclosed in GB—A—361245, GB—A—390366 and GB—A—426944.

With modern vehicles having low profiles to reduce drag and lower the centre of mass such double skin arrangements are not feasible and in addition can be easily damaged by deformation of the relatively thin inner skin that would be necessary. Another problem is the connection of the roof cavity with an extractor unit, this involving a complex system of baffles. The proposal in GB—A—839306 involves a complex assembly and requires air-tight box construction to be used, neither of which is obtainable with spot welded constructions without much labour and finishing work.

In DE—A—2803624 an arrangement is proposed wherein a duct is provided in the roof area with an electric fan in the boot. Such a duct is difficult to secure to the vehicle after manufacture.

The problem to be solved, therefore, is to provide roof space ventilation giving advantages inherent therein as obtained with the prior-art known, but without requiring constructional modifications and without unduly reducing headroom within the vehicle. The arrangement nevertheless being able to provide high extraction rates and being independent of any ventilation already fitted and also being easily fitted to existing vehicles.

It is one of the main objects of the present invention to provide such a system which can be incorporated into existing vehicles as an add-on accessory without needing substantial modifications to the structure of the vehicle.

According to this invention an air ventilation or extraction system in a vehicle comprises a ducting adjacent the roof and extending longitudinally thereof within the passenger compartment, a plurality of air intake apertures communicating with the ducting and each located adjacent a seating position in the vehicle, impelling means for drawing air in through the intakes and moving same along the ducting, the rear of the ducting passing through an aperture to exhaust air externally of the passenger compartment, characterised in that the ducting comprises a moulding which is located longitudinally along the juncture between the roof and side of the vehicle, the air intake apertures being provided at spaced locations along the ducting, the rear of the ducting following the roof line down to a position behind the rear-most seats and passing through the aperture to the vehicle boot, the ducting moulding being of a resilient flexible plastics material of channel section the edges of which have means such as flanges to secure the ducting to the vehicle roof.

The ducting thus comprises a readily attachable and possibly removable moulding which is adapted to be located longitudinally along the junction between the roof and side of the vehicle above the door frames with suitable apertures being provided for intake of air at appropriately spaced locations within the passenger compartment, close to the seating position of each person. An electrical fan comprising the air propelling means may be located within the ducting at a suitable point to propel air down the ducting to an exhaust which passes through the vehicle body to dispose of air either externally of the vehicle or into the boot (trunk).

The ducting will be formed so as to be as intrusive as possible and is preferably located beneath the normal fabric finish or other head lining as used in the roof. The ducting may, however, be covered with suitable trim for attachment to the vehicle roof. Apertures are provided in the ducting, conveniently located close to positions of passenger seating so that adequate individual extraction of air from the location of each passenger can be obtained.

The arrangement may be integrated with the vehicle's heating and/or air conditioning system or alternatively and preferably may be an independently operating arrangement.

The system provides for ready conversion of existing vehicles with the only external modification required being the provision of a suitable aperture or ducting to exhaust the air externally.

The ducting may comprise a channel shape moulding forming, in conjunction with existing parts of the vehicle structure, a duct. The air intakes may be consituted by perforated or louvred portions which can be made adjustable. A single extractor fan may be provided conveniently installed on the rear parcel shelf of a vehicle and extraction of air can be through suitable orifices into the boot (trunk) of the vehicle.

It can thus be seen that the ducting may be positioned as required to avoid serious incursions into the head room available and is suitable particularly for compact vehicles which otherwise have insufficient space for efficient ventilation. Furthermore, the invention enables an extraction system to be fitted after main assembly of a vehicle as an optional extra if required.

Embodiments according to the invention are shown by way of example only in the accompanying drawings, wherein:—

Figure 1 shows the side view of a motor vehicle incorporating an extractor means,

Figure 2 shows a plan view,

Figure 3 is a section on BB of Figure 2,

Figure 4 shows a perspective view of the vehicle interior,

Figure 5 shows a detail section through a ducting in a vehicle,

Figure 6 shows a section through the rear of a vehicle with extractor fan, and

Figure 7 shows a part of a further ducting.

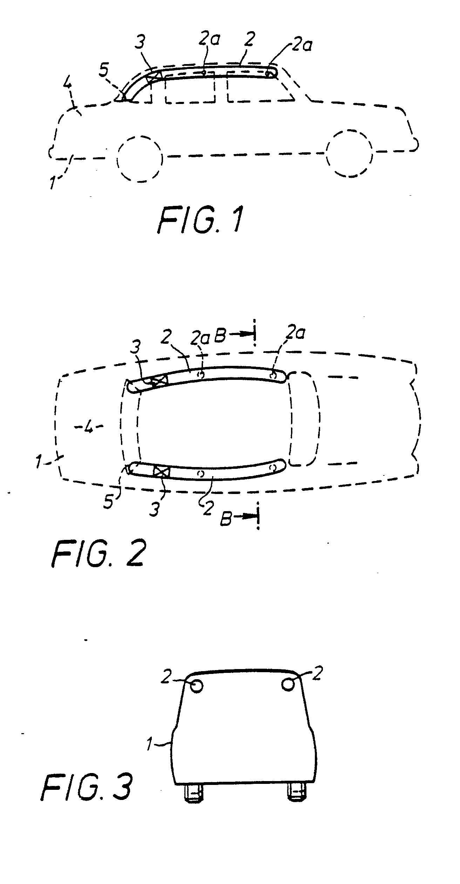

Figures 1—4 and 6 illustrate the positioning of the ducting within the vehicle. They do not show the precise construction of the ducting.

As shown generally in Figures 1 to 4 of the drawings, a saloon car 1 incorporates an extractor tube forming a duct 2 within the roof and running longitudinally above the door line of the vehicle. Air intakes 2a are provided at suitable locations in the tube and the rearward end of the tube includes an electrically driven fan 3 serving to draw air in through the intakes and propels same along the tube to be fed into the boot 4 via suitable apertures 5.

The arrangement described does not require any structural alteration to the body of the vehicle and the ducting connection can generally be easily passed through the rear parcel shelf, which in most instances is of a purely cosmetic construction. Not only does the arrangement provide for a rearward extraction of fumes, but in addition the air intakes can be positioned as convenient according to the vehicle construction and as best adapted to the internal air flow characteristics. The arrangement further obviates the disadvantage of known rear extraction systems wherein the whole of the air flow must pass from the front to the rear of the vehicle to be extracted, with attendant discomfort to rear passengers. In the construction described extraction is at convenient points relating to each individual passenger and, by means of the fan extraction, is not dependent on vehicle speed.

The fan 3 may be positioned in the boot and with such an arrangement connection to the ducts is simple and furthermore noise, which is a considerable problem with impellers of high capacity, can be much reduced due to the physical separation from the passenger compartment.

The exhaust of air into the boot provides several advantages. The flow is generally unaffected by air flow external to the vehicle and the fan ensures that fumes cannot be introduced from the rear of the vehicle due to flow reversal which can occur with passive systems if, for example, a window is opened to create a back draught overcoming the extraction suction. There is a steady extraction regardless of vehicle speed enabling the extraction to be balanced more satisfactorily with existing ventilation and air conditioning systems. The extractor fan may be physically large producing less noise and can be acoustically screened from the vehicle. The arrangement can be added to existing vehicles by a non-expert.

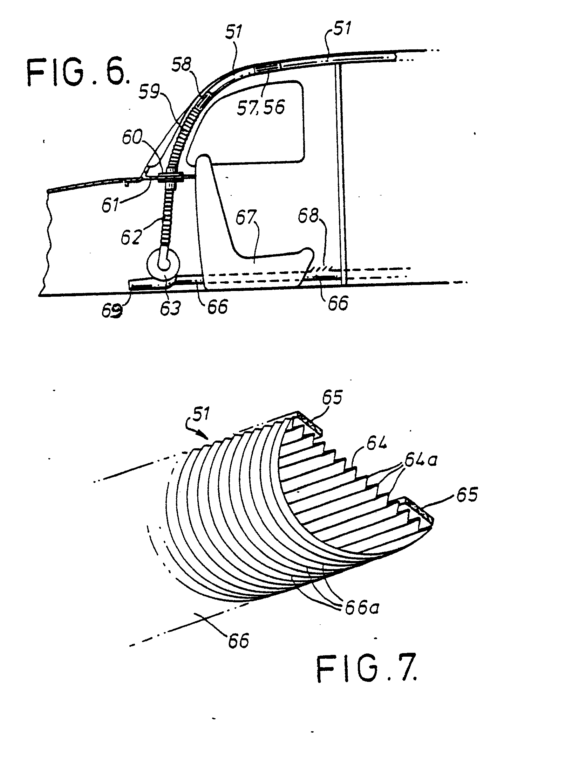

Figures 5 to 7 show embodiments mainly intended for use with a fan unit mounted in the boot and for fitting to existing vehicles. In Figure 5 the duct 50 is formed from a channel section 51 of a flexible plastics material having flanges 52 running longitudinally and including an adhesive coated foam plastic strip 53 by which the channel edges may be secured to the roof 54 of a vehicle. The channel 51 may have vents 55 formed therein for intake of air, or alternatively additional sections may be provided which couple two channels together, these sections 56 having suitable apertures 57 which may be of variable dimension and adjustable. Sections 56 may be dimensioned to overlap the ducting or to fit inside same with appropriate seals being provided. The front end of the ducting can be closed by means of a cap (not shown). Other sections can be provided to enable angular joints to be made between sections of ducting.

Connection to the fan unit may be made by means of the coupling passing through to the vehicle boot, as shown in Figure 6 wherein the channel 51 connects via a coupling 58 with a flexible hose 59 connected with a pipe flange 60 passing through the rear parcel shelf 61, and connected by a further hose 62 with an impeller fan unit 63. Exhaust air may be discharged at 69 into the boot, or conveyed via a further pipe (not shown) externally of the vehicle. A manifold provides for both sides of the vehicle to be served by a single fan unit 63.

Figure 7 shows a further section of ducting 51 and in this arrangement a D-shape section is provided with a base 64 thereof having longitudinally extending corrugations or convolutions 64a, so that it may be readily flexed to fit the curvature of a vehicle roof and secured by adhesive strips or pads 65. The outer profile 66 of the ducting may be convoluted radially at 66a to allow flexing in a longitudinal direction. Here again various vents and connecting pieces can be provided as in Figures 5 and 6, with suitable sealant or foam plastics being used between the joints.

The arrangement thus enables a number of basic units to be selectively assembled and fitted to a vehicle according to requirements, by selecting appropriate lengths of ducting and connectors to join same through various angles.

The extracted air can be filtered and recirculated if required and where heat conservation is important. The air may be conditioned in a separate or integral unit and returned to the vehicle.

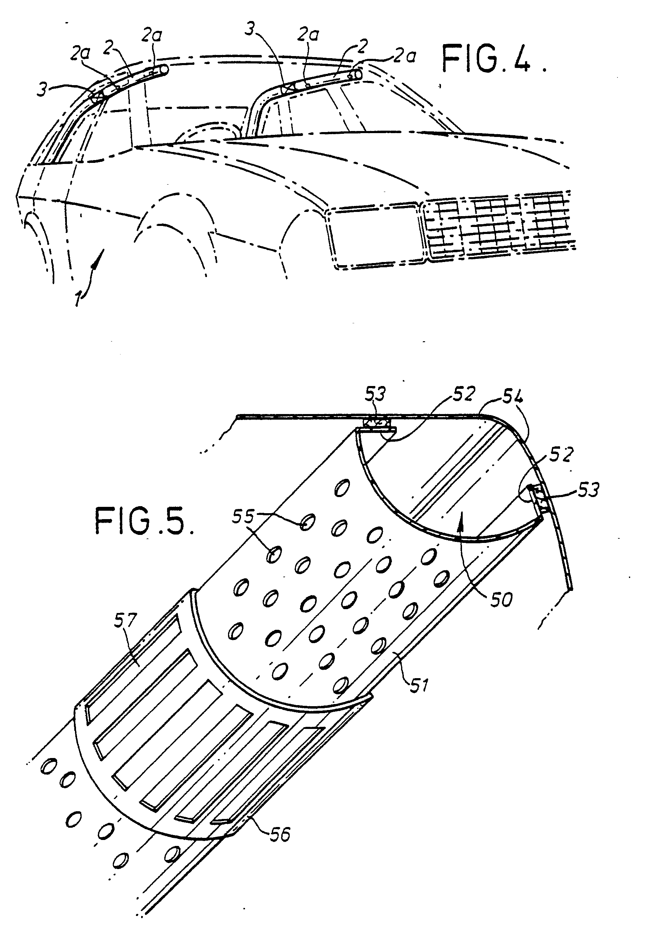

In the embodiments of Figures 5 and 6 the fan unit can be mounted on the rear parcel shelf 61, or within the ducting, by means of a suitable enclosure to form an arrangement similar to that of Figure 4.

If an air conditioning unit is used with the fan 63 of Figure 6, then return conditioned air can be fed back into the passenger compartment through further ducts 66 passing beneath the rear seats 67 and having suitable vents 68 at floor level.

## Claims

1. An air ventilation or extraction system in a vehicle (1), comprising a ducting (2, 50) adjacent the roof and extending longitudinally thereof within the passenger compartment, a plurality of air intake apertures (2a, 55) communicating with the ducting (2, 50) and each located adjacent a seating position in the vehicle (1), impelling means (3, 63) for drawing air in through the intakes (2a, 57) and moving same along the ducting (2, 50), the rear of the ducting passing through an aperture to exhaust air externally of the passenger compartment, characterised in that the ducting (2, 50) comprises a moulding which is located longitudinally along the juncture between the roof and side of the vehicle (1), the air intake apertures (2a, 55) being provided at spaced locations along the ducting (2, 50), the rear of the ducting (2, 50) following the roof line down to a position behind the rearmost seats (67) and passing through the aperture to the vehicle boot (4), the ducting moulding being of resilient flexible plastics material of channel section the edges of which have means to secure the ducting to the vehicle roof.

2. An air ventilation or extraction system as claimed in Claim 1, wherein the ducting (2, 50) is connected with an air impelling fan (63) positioned within the boot (trunk) structure, whereby air is either exhausted into the boot (4), conditioned and recirculated to the passenger compartment, or further ducted externally of the vehicle (1).

3. An air ventilating or extraction system as claimed in Claim 1 or 2, wherein the edges of the moulding have flanges (52) carrying an adhesive coated foam plastics strip material (53).

4. An air ventilation or extraction system as claimed in any preceding claim, wherein the ducting (2, 50) is formed from sections which are sealingly interengaged.

5. An air ventilation or extraction system as claimed in Claim 4, wherein one or more of the sections have apertures therein forming the intake means (2a, 57).

6. An air ventilation or extraction system according to any preceding Claim, wherein a part at least of the ducting is convoluted whereby it may be curved to conform with the vehicle roof contour.

7. An air ventilation or extraction system as claimed in Claim 6, wherein the ducting has longitudinally extending corrugations or convolutions enabling said surface to be curved about a longitudinal axis to conform with a vehicle roof contour.

## Patentansprüche

1. Be- oder Entlüftungssystem für ein Fahrzeug (1), bestehend aus einem Kanal (2, 50), der im Bereich des Daches in dessen Längsrichtung im Fahrgastraum verläuft und mit dem mehrere Lufteinlaßöffnungen (2a, 55) in Verbindung stehen, von denen jede im Bereich einem Sitzplatzes des Fahrzeuges (1) angeordnet ist, aus einer Zulufteinrichtung (3, 63) zum Ansaugen von Luft durch die Einlässe (2a, 57) und zum Transportieren der Luft durch den Kanal (2, 50), dessen hinteres Ende durch eine Öffnung zum Ableiten von Luft aus dem Fahrgastraum geführt ist, dadurch gekennzeichnet, daß der Kanal (2, 50) aus einem Formteil besteht, der entlang der Verbindungslinie zwischen dem Dach und der Seitenwand des Fahrzeuges (1) verläuft, daß die Lufteinlaßöffnungen (2a, 55) in gegenseitigen Abständen entlang des Kanales (2, 50) angeordnet sind, daß das hintere Ende des Kanales (2, 50) der Dachlinie abwärts bis zu einer Stelle hinter den hintersten Sitzen (67) folgt und durch die Öffnung in den Kofferraum (4) des Fahrzeuges führt, und daß der Formteil aus elastischem flexiblem Kunststoff mit Kanal-Querschnitt besteht, dessen Ränder mit Einrichtungen zur Befestigung des Kanales am Fahrzeugdach versehen sind.

2. Be- oder Entlüftungssystem nach Anspruch 1, dadurch gekennzeichnet, daß der Kanal (2, 50) mit einem im Kofferraum angeordneten Zuluftgebläse (63) verbunden ist, wobei Luft entweder in den Kofferraum (4) ausgeblasen, klimatisiert und in den Fahrgastraum rückgeführt oder aus dem Fahrzeug (1) abgeführt wird.

3. Be- oder Entlüftungssystem nach Anspruch 1 oder 2, dadurch gekennzeichnet, daß die Ränder des Formteiles Flanschen (52) aufweisen, die mit einem klebstoffbeschichteten Schaumstoffstreifen (53) versehen sind.

4. Be- oder Entlüftungssystem nach den Ansprüchen 1 bis 3, dadurch gekennzeichnet, daß der Kanal (2, 50) von dicht ineinandergreifenden Abschnitten gebildet ist.

5. Be- oder Entlüftungssystem nach Anspruch 4, dadurch gekennzeichnet, daß ein oder mehrere Abschnitte mit darin ausgebildeten Öffnungen versehen sind, welche die Einlässe (2a, 57) bilden.

6. Be- oder Entlüftungssystem nach den Ansprüchen 1 bis 5, dadurch gekennzeichnet, daß ein Teil zumindest des Kanales gewellt oder gefaltet ist, wodurch er zur Anpassung an die Dachkontur des Fahrzeuges krümmbar ist.

7. Be- oder Entlüftungssystem nach Anspruch 6, dadurch gekennzeichnet, daß der Kanal längsverlaufende Wellungen oder Faltungen aufweist, wodurch er zur Anpassung an die Dachkontur des Fahrzeuges um eine längsverlaufende Achse krümmbar ist.

**Revendications**

1. Système de ventilation et d'extraction d'air dans un véhicule (1), comprenant une canalisation (2, 50) voisine du toit, s'étendant le long de celui-ci dans l'habitacle pour passagers, plusieurs ouvertures (2a, 55) de prise d'air communiquant avec la canalisation et étant chacune située au voisinage des sièges du véhicule (1), une turbine (3, 63) pour aspirer l'air par les orifices (2a, 57) et le faire progresser dans la canalisation (2, 50), l'arrière de la canalisation passant par une ouverture pour rejeter l'air à l'extérieur de l'habitacle pour passagers, ce système étant caractérisé par le fait que la canalisation (2, 50) comprend une pièce moulée placée longitudinalement le long de la jonction entre le toit et les parois latérales du véhicule (1), les ouvertures (2a, 55) de prise d'air étant situées à des emplacements espacés le long de la canalisation (2, 50), l'arrière de la canalisation (2, 50) suivant la ligne descendante du toit jusqu'à une position située tout à fait à l'arrière derrière les sièges (67) les plus à l'arrière et traversant une ouverture pour arriver dans le coffre (4) du véhicule, le tronçon moulé de canalisation étant en matière plastique souple et élastique en forme de U dont les rebords comportent un moyen permettant la fixation de la canalisation au toit du véhicule.

2. Système de ventilation ou d'extraction d'air selon la revendication 1, dans lequel la canalisation (2, 50) est raccordée à un ventilateur (63) à ailettes placé dans le coffre (malle arrière) de sorte que l'air est, soit rejeté dans le coffre (4), climatisé, et remis en circulation vers l'habitacle pour passagers, soit acheminé jusqu'à l'extérieur du véhicule (1).

3. Système de ventilation ou d'extraction d'air selon les revendications 1 et 2, dans lequel les bords de la pièce moulée comportent des ressorts (52) portant une bande de mousse de matière plastique (53) revêtue d'un adhésif.

4. Système de ventilation ou d'extraction d'air selon l'une quelconque des revendications précédentes, dans lequel la canalisation (2, 50) est formée de tronçons qui sont emboîtés de manière étanche l'un dans l'autre.

5. Système de ventilation ou d'extraction d'air selon la revendication 4, dans lequel un ou plusieurs des tronçons comporte(nt) des ouvertures (2a, 57) formant prise d'air.

6. Système de ventilation ou d'extraction d'air selon l'une quelconque des revendications ci-dessus, dans lequel au moins une partie de la canalisation comporte des replis afin de pouvoir être fléchie pour se conformer à la courbure du toit d'un véhicule.

7. Système de ventilation ou d'extraction d'air selon la revendication 6, dans lequel la canalisation comporte des rainures ou replis longitudinaux permettant à ladite surface de se recourber autour d'un axe longitudinal pour se conformer à la courbure du toit d'un véhicule.

FIG. 1

FIG. 2

FIG. 3

FIG.4.

FIG.5.

FIG. 6.

FIG. 7.